**Europäisches Patentamt**

**European Patent Office**

**Office européen des brevets**

(19)

(11) Veröffentlichungsnummer: **0 297 226**
**B1**

# EUROPÄISCHE PATENTSCHRIFT

(12)

(45) Veröffentlichungstag der Patentschrift:
08.08.90

(21) Anmeldenummer: 88105791.3

(22) Anmeldetag: 12.04.88

(51) Int. Cl.⁵: **B60K 5/04**

(54) **Lagerung einer Brennkraftmaschine.**

(30) Priorität: 30.06.87 DE 3721507

(43) Veröffentlichungstag der Anmeldung:
04.01.89 Patentblatt 89/1

(45) Bekanntmachung des Hinweises auf die Patenterteilung:
08.08.90 Patentblatt 90/32

(84) Benannte Vertragsstaaten:
DE ES FR GB IT NL SE

(56) Entgegenhaltungen:
DE-A- 3 402 100
FR-A- 2 453 746

PATENT ABSTRACTS OF JAPAN
PATENT ABSTRACTS OF JAPAN Band 7,
NR: 157 (M-227)(1302), 9. Juli 1083; &
JP-A-58 063 520 (NISSAN JIDOSCHA K.K.) 15.04.1983

(73) Patentinhaber: **Dr.Ing.h.c. F. Porsche
Aktiengesellschaft, Porschestrasse 42,
D-7000 Stuttgart 40(DE)**

(72) Erfinder: **von Sivers, Rolf, Dipl.-Ing. FH, Gebersheimer
Strasse 7/1, D-7255 Rutesheim(DE)**
Erfinder: **Fischle, Rüdiger, Dipl.-Ing. FH,
Niederhofenstrasse 33/2, D-7250 Leonberg(DE)**
Erfinder: **von Broock, Ulrich, Dr. Dipl.-Ing., Eberdinger
Strasse 58, D-7251 Weissach(DE)**

**Beschreibung**

Die Erfindung bezieht sich auf eine Lagerung einer Brennkraftmaschine nach dem Oberbegriff des Patentanspruchs 1.

Die DE-AS 22 22 254 behandelt eine Aufhängevorrichtung für ein Kraftwagen-Antriebsaggregat, das quer im Bug des Kraftwagens eingebaut ist. Die Aufhängevorrichtung umfasst elastische Lager und Drehmomentstützen, die zwischen feststehenden Kraftwagenteilen und dem Antriebsaggregat angeordnet sind.

Aufgabe der Erfindung ist es, eine Lagerung für eine in einen Personenwagen eingesetzte Brennkraftmaschine derart zu gestalten, daß die auftretenden Schwingungen, Geräusche und Massebewegungen der Brennkraftmaschine wirkungsvoll aufgenommen und wesentlich gedämpft, d.h. störungsfrei in den Aufbau des Personenwagens eingeleitet werden. Dabei sollte aber auch die Bewegungsfreiheit der Brennkraftmaschine funktionsgerecht sein.

Erfindungsgemäß wird diese Aufgabe durch die kennzeichnenden Merkmale des Patentanspruchs 1 gelöst. Weitere, die Erfindung ausgestaltende Merkmale sind in den Unteransprüchen enthalten.

Die mit der Erfindung erzielten Vorteile sind hauptsächlich darin zu sehen, daß durch die Anordnung und Ausbildung der Lager sowie der Drehmomentstützen die Anregungen der Brennkraftmaschine im Fahrbetrieb gut gedämpft und geräuscharm in den Aufbau des Personenwagens eingeleitet werden, wobei die so gestaltete Lagerung eine definierte Beweglichkeit der Brennkraftmaschine sicherstellt. Die beiden Lager nehmen statische und dynamische Gewichtskräfte wirkungsvoll auf. Auch lassen sie sich an dem durch Brennkraftmaschine und Getriebe gebildeten Aggregat leicht anbringen. Außerdem ist durch die Lage der Lager der Einbau der Brennkraftmaschine einfach.

Die Drehmomentstützen sind so angebracht, daß zwischen ihnen eine gezielte relativ große Abstandsbasis gegeben ist. Darüber hinaus liegen diese Stützen in einem Bereich geringer Aggregatvibration, was die Vibrationseinleitung unter Last reduziert.

In der Zeichnung sind Ausführungsbeispiele der Erfindung gezeigt, die nachstehend näher beschrieben sind.
Es zeigt

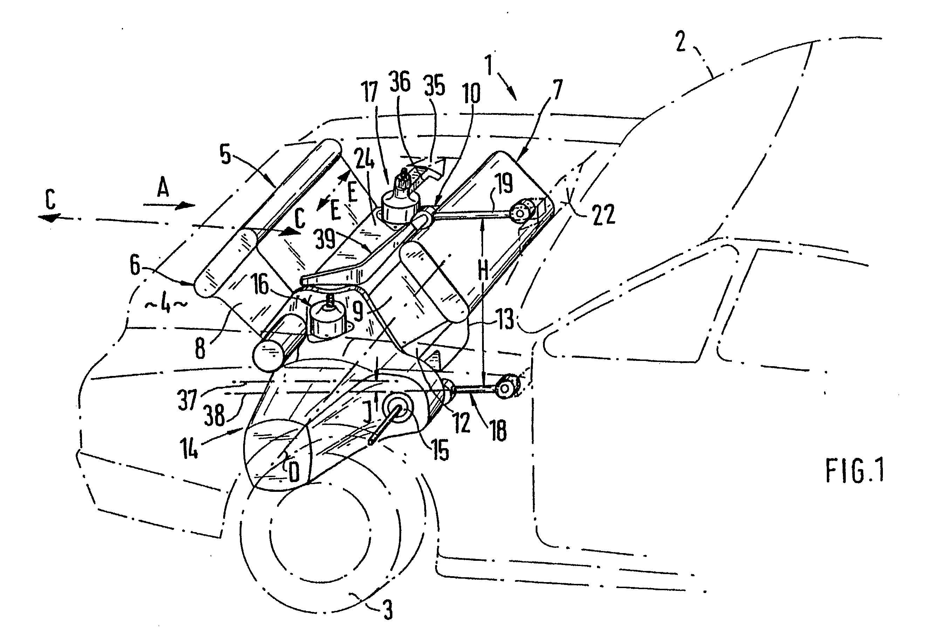

Fig. 1 eine Schrägansicht eines Personenwagens mit der Lagerung der Brennkraftmaschine nach der Erfindung,
Fig. 2 eine Ansicht in Pfeilrichtung A der Fig. 1 in größerem Maßstab,
Fig. 3 eine Einzelheit X der Fig. 1 in größerem Maßstab.

Der Personenwagen 1 umfasst einen Aufbau 2, der von Rädern 3 getragen wird. Der Aufbau 2 weist einen Bugraum 4 auf, in den eine Brennkraftmaschine 5 eingesetzt ist. Die Brennkraftmaschine 5 ist quer zur Fahrzeuglängsrichtung C-C ausgerichtet und weist V-förmige Zylinderreihen 6, 7 auf, die im Winkel von 105° zueinander angeordnet sind. Pro Zylinderreihe sind drei Zylinder vorgesehen, deren Kolben mit einer dreifach gekröpften Kurbelwelle verbunden sind. Letztere ist nicht gezeigt.

Außerdem weist die Brennkraftmaschine 5 zwei Zylinderköpfe 8, 9 auf, die an ein Kurbelgehäuse 10 angeschlossen sind. Das Kurbelgehäuse 10 besitzt unterhalb der Zylinderköpfe 8, 9 senkrecht stehende Seitenwandungen 11, 12, die mit einer Ölwanne 13 verbunden sind.

Mit der Brennkraftmaschine 5 verblockt ist ein Getriebe 14, das eine Verlängerung der Brennkraftmaschine 5 bildet, und bei 15 mit einem Abtrieb für das Rad 3 versehen ist, d.h. der Personenwagen 1 wird zumindest über die Vorderräder 3 angetrieben.

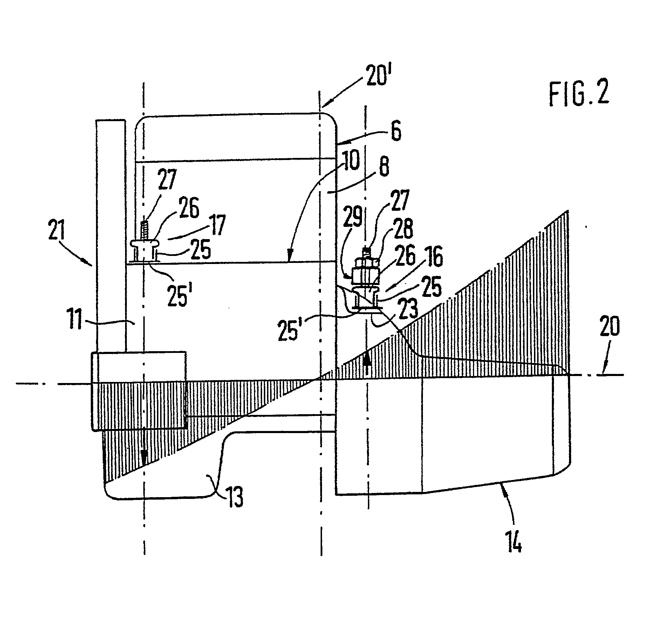

Zur Lagerung der Brennkraftmaschine 5 dienen ein erstes Lager 16, ein zweites Lager 17 und Drehmomentstützen 18, 19. Die Brennkraftmaschine 5 hängt unterhalb der elastischen und gegebenenfalls auch hydraulisch gedämpften Lager 16, 17. Dabei ist das erste Lager 16 oberhalb, jedoch unweit der horizontalen Schwerpunktebene 20 sowie in oder benachbart der senkrechten Schwerpunktebene 20' der Brennkraftmaschine 5 angeordnet. Das zweite Lager 17 hingegen ist auf der entfernt vom Getriebe 14 liegenden Seite nahe der freien Stirnseite 21 der Brennkraftmaschine 5 - Fig. 2 - angebracht.

Die Drehmomentstützen 18, 19 sind horizontal ausgerichtet, verlaufen mit horizontalem Abstand H zueinander und erstrecken sich zwischen einer Stirnwand 22 des Aufbaus 2 und der Brennkraftmaschine 5 bzw. dem Getriebe 14.

Das erste Lager 16 wirkt mit dem Getriebe 14 zusammen, das in dem entsprechenden Bereich eine Aufnahme 23 für das Lager 16 aufweist. Das zweite Lager 17 ist an die Brennkraftmaschine 5 angeschlossen und zwar am Kurbelgehäuse 9 zwischen den Zylinderreihen 6, 7; das Kurbelgehäuse 9 ist dort mit einer horizontalen Wand 24 versehen. Ferner liegen beide Lager 16, 17 in der Nähe einer Brennkraftmaschinenmittellängsebene, die die Kurbelwellenlängsachse D schneidet.

Beide Lager 16, 17 sind baugleiche Teile mit identischer Gummigeometrie, jedoch sind sie unterschiedlich angeordnet: das erste Lager 16 ist in Fahrzeuglängsrichtung C-C steifer als in Fahrzeugquerrichtung E-E; beim zweiten Lager 17 ist es umgekehrt.

Die Lager 16, 17 weisen Aufnahmekörper 25 für elastische Elemente 26 auf, wobei die Aufnahmekörper 25 mit einem metallischen Flansch 25' versehen sind, die direkt mit dem Kurbelgehäuse 10 bzw. dem Getriebe 14 unter Vermittlung von Schrauben verbunden sind. Aus den elastischen Elementen 26 ragen Schraubbolzen 27 heraus, die am Aufbau 2 oder daran angebrachten Teilen durch Schraubenmuttern 28 gehalten sind.

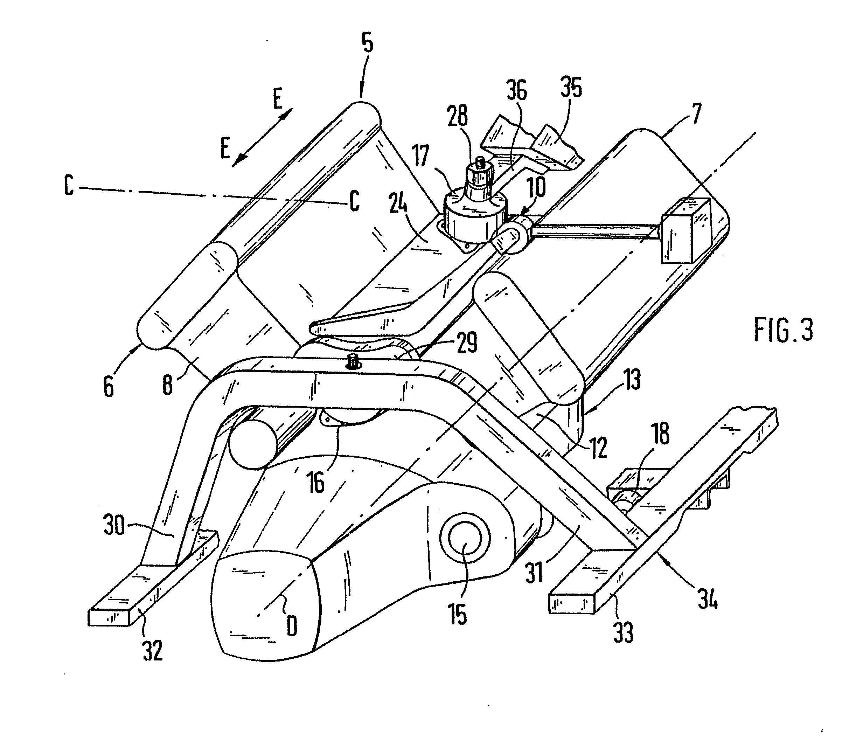

Gemäß Fig. 3 ist das erste Lager 16 auf der dem Getriebe 14 abgekehrten Seite mit einem in Fahrzeuglängsrichtung C-C verlaufenden Träger 29 verbunden. Der Träger 29 weist in Richtung Fahrbahn verlaufende Schenkel 30, 31 auf, so daß er das Getriebe 14 jochartig umgibt. Mit den freien Enden der Schenkel 30, 31 sind Querträger 32, 33 verbunden, die in Fahrzeugquerrichtung E-E ausgerichtet sind. Die Träger 29 und die Querträger 32, 33 sind Bestandteil eines Lagerschemels 34, der mittels Schrauben gegebenenfalls unter Vermittlung elastischer Elemente am Aufbau 2 des Personenwagens 1 gehalten ist.

Das zweite Lager 17 ist auf der dem Kurbelgehäuse 9 abgekehrten Seite mit einer am Aufbau 2 angebrachten Konsole 35 verbunden. Diese umfasst einen Arm 36, der sich in Fahrzeugquerrichtung E-E erstreckt.

Die Lager 16, 17 können vormontiert am Träger 29 bzw. Arm 36 sein, wobei in diesem Fall die Brennkraftmaschine 5 von der Unterseite des Personenwagens aus an diese Lager, an denen sie ja hängt, herangeführt wird.

Die untere Drehmomentstütze 18 ist unterhalb einer die Kurbelwellenlängsachse D der Brennkraftmaschine 5 schneidenden Querebene 37 am Getriebe 14 angeordnet. Der Abstand zwischen der Querebene 37 und der Lagerebene 38 der Drehmomentstütze 18 ist mit J bezeichnet. Auf der dem Getriebe 14 abgekehrten Seite kann sie an der Stirnwand 22 oder am Querträger 33 des Lagerschemels 34 angeordnet sein.

Die obere Drehmomentstütze 19 verläuft oberhalb der Zylinderreihe 7 und ist mit einem Winkelhebel 39 verbunden, der am Kurbelgehäuse 9, und zwar zwischen den Zylinderreihen 7, 8 befestigt ist. Auf der entfernt vom Winkelhebel 40 liegenden Seite ist sie an der Stirnwand 22 gehalten. Schließlich sind die beiden Drehmomentstützen 18, 19 so angeordnet, daß sie sich in der Nähe der senkrechten Schwerpunktebene 20' der Brennkraftmaschine 2 an letzterer abstützen (Fig. 2).

## Patentansprüche

1. Lagerung einer Brennkraftmaschine, die vorzugsweise V-förmige Zylinderreihen aufweist, eine Einheit mit einem Getriebe bildet sowie quer in einen Aufbau eines Personenwagens eingebaut ist und darüber hinaus mittels Lagern und Drehmomentstützen an festen Einrichtungen, namentlich des Aufbaus, gehalten ist, dadurch gekennzeichnet, daß die Brennkraftmaschine (5) zumindest an einem ersten Lager (16) hängt, derart, daß das erste Lager oberhalb, jedoch unweit von der horizontalen Schwerpunktebene (20) sowie beabstandet zur senkrechten Schwerpunktebene (20) der Brennkraftmaschine (5) angeordnet ist und ein zweites Lager (17) auf der entfernt vom Getriebe (14) liegenden Seite, insbesondere in der Nähe der Stirnwand (21) der Brennkraftmaschine (5) angebracht ist, wobei wenigstens zwei etwa horizontal ausgerichtete und in der Höhe (Abstand H) versetzt zueinander angeordnete Drehmomentstützen (18, 19) sich zwischen einer Stirnwand (22) des Aufbaus (2) und der Brennkraftmaschine (5) erstrecken.

2. Lagerung nach Anspruch 1, dadurch gekennzeichnet, daß das erste Lager (16) mit dem Getriebe (14) zusammenwirkt, wogegen das zweite Lager (17) an einem Gehäuse (Kurbelgehäuse 10) der Brennkraftmaschine (5) zwischen den V-förmigen Zylinderreihen (6, 7) angeordnet ist.

3. Lagerung nach Anspruch 2, dadurch gekennzeichnet, daß beide Lager (16, 17) in der Nähe einer Mittellängsebene der Brennkraftmaschine (5) liegen.

4. Lagerung nach Anspruch 1, dadurch gekennzeichnet, daß das erste Lager (16) in Fahrzeuglängsrichtung (C-C) steifer ist als in Fahrzeugquerrichtung (E-E), wogegen das zweite Lager (17) in Fahrzeugquerrichtung (E-E) steifer ist als in Fahrzeuglängsrichtung (C-C).

5. Lagerung nach Anspruch 4, dadurch gekennzeichnet, daß die beiden Lager (16, 17) baugleiche Teile mit identischer Gummigeometrie sind.

6. Lagerung nach den Ansprüchen 1 bis 5, dadurch gekennzeichnet, daß jedes Lager (16 oder 17) einen metallischen Flansch (25') aufweist, der direkt mit dem Getriebe (14) bzw. dem Gehäuse (Kurbelgehäuse 10) verbunden ist.

7. Lagerung nach den Ansprüchen 1; 3 und 6, dadurch gekennzeichnet, daß das erste Lager (16) auf seiner dem Getriebe (14) abgekehrten Seite mit einem in Fahrzeuglängsrichtung (C-C) verlaufenden Träger (29) verbunden ist.

8. Lagerung nach Anspruch 7, dadurch gekennzeichnet, daß der Träger (29) jochartig das Getriebe (14) umgibt und an unterhalb des Lagers (16) verlaufenden Querträgern (32, 33) angeschlossen ist.

9. Lagerung nach den Ansprüchen 7 und 8, dadurch gekennzeichnet, daß der Träger (29) und die Querträger (32, 33) Bestandteil eines Lagerschemels (34) sind.

10. Lagerung nach den Ansprüchen 1 bis 3 und 6, dadurch gekennzeichnet, daß das zweite Lager (17) auf seiner dem Gehäuse (Kurbelgehäuse 10) abgekehrten Seite mit einer am Aufbau (2) befestigten Konsole (35) verbunden ist.

11. Lagerung nach Anspruch 10, dadurch gekennzeichnet, daß das zweite Lager (17) an einen etwa horizontal ausgerichteten Arm (36) der Konsole (35) angeschlossen ist.

12. Lagerung nach den Ansprüchen 7 und 11, dadurch gekennzeichnet, daß die Lager (16, 17) am Träger (29) bzw. Arm (36) vormontiert sind und die Brennkraftmaschine (5) von der Unterseite des Personenwagens (1) aus an diese Lager (16, 17) herangeführt wird.

13. Lager nach Anspruch 1, dadurch gekennzeichnet, daß die untere Drehmomentstütze (18) unterhalb einer die Längsmittelachse (D) der Kurbelwelle schneidende Querebene (37) am Getriebe (14) befestigt ist.

14. Lagerung nach den Ansprüchen 9 und 13, dadurch gekennzeichnet, daß die untere Drehmomentstütze (18) auf ihrer dem Getriebe (14) abgekehrten Seite am Querträger (33) des Lagerschemels (34) angebracht ist.

15. Lagerung nach Anspruch 1, dadurch gekennzeichnet, daß die obere Drehmomentstütze (19) sich oberhalb der einen Zylinderreihe (7) erstreckt und unter Vermittlung eines Hebels (Winkelhebel 40) am Gehäuse (Kurbelgehäuse 10) zwischen den Zylinderreihen (6, 7) gehalten ist.

16. Lagerung nach Anspruch 15, dadurch gekennzeichnet, daß die Drehmomentstütze (19) auf der entfernt vom Hebel (Winkelhebel 40) liegenden Seite an der Stirnwand (22) befestigt ist.

17. Lagerung nach den Ansprüchen 1; 13 bis 15, dadurch gekennzeichnet, daß die beiden Drehmomentstützen (18, 19) benachbart der senkrechten Schwerpunktebene (20') der Brennkraftmaschine (5) angeordnet sind.

## Claims

1. A mounting for an internal combustion engine, preferably comprising V-shaped rows of cylinders, forming one unit with a transmission and mounted transversely in a body of a car, and also held by means of bearings and torque legs on fixed devices, i.e. of the body, characterized in that the internal combustion engine (5) is suspended at least on a first bearing (16) and a second bearing (17) in such a way that the first bearing is situated above, but not far from, the horizontal plane (20) through the centre of gravity and adjacent to the vertical plane (20') through the centre of gravity of the internal combustion engine (5), and the second bearing (17) is situated on the side remote from the transmission (14), in particular in the vicinity of the end wall (21) of the internal combustion engine (5), at least two horizontally orientated torque legs (18, 19) arranged offset from each other vertically (the distance H) extending between an end wall (22) of the body (2) and the internal combustion engine (5).

2. A mounting according to claim 1, characterized in that the first bearing (16) cooperates with the transmission (14), whereas the second bearing (17) is mounted on a housing (crankcase 10) of the internal combustion engine (5) between the V-shaped cylinder rows (6, 7).

3. A mounting according to claim 2, characterized in that both bearings (16, 17) are located in the vicinity of a median longitudinal plane of the internal combustion engine (5).

4. A mounting according to claim 1, characterized in that the first bearing (16) is more rigid in the longitudinal direction (C-C) of the vehicle than in the transverse direction (E-E) of the vehicle, whereas the second bearing (17) is more rigid in the transverse direction (E-E) of the vehicle than in the longitudinal direction (C-C) of the vehicle.

5. A mounting according to claim 4, characterized in that the two bearings (16, 17) are structurally similar parts with identical rubber geometry.

6. A mounting according to claims 1 to 5, characterized in that each bearing (16 or 17) has a metallic flange (25') directly connected to the transmission (14) or the housing (crankcase 10).

7. A mounting according to claims 1; 3 and 6, characterized in that the first bearing (16) is connected on its side remote from the transmission (14) to a support (29) extending in the longitudinal direction (C-C) of the vehicle.

8. A mounting according to claim 7, characterized in that the support (29) surrounds the transmission (14) in the manner of a yoke and is joined to transverse supports (32, 33) extending below the bearing (16).

9. A mounting according to claims 7 and 8, characterized in that the support (29) and the transverse supports (32, 33) are component parts of a bearing slide (34).

10. A mounting according to claims 1 to 3 and 6, characterized in that the second bearing (17) is connected at its side remote from the housing (crankcase 10) to a bracket (35) secured to the body (2).

11. A mounting according to claim 10, characterized in that the second bearing (17) is joined to an arm (36) of the bracket (35) orientated approximately horizontally.

12. A mounting according to claims 7 and 11, characterized in that the bearings (16, 17) are mounted beforehand on the support (29) or arm (36), and the internal combustion engine (5) is brought forward from the underside of the car (1) onto the said bearings (16, 17).

13. A mounting according to claim 1, characterized in that the lower torque leg (18) is secured to the transmission (14) below a transverse plane (37) intersecting the longitudinal median axis (D) of the crankshaft.

14. A mounting according to claims 9 and 13, characterized in that the lower torque leg (18) is mounted on its side remote from the transmission (14) on the transverse support (33) of the bearing slide (34).

15. A mounting according to claim 1, characterized in that the upper torque leg (19) extends above one cylinder row (7) and is held on the housing (crankcase 10) between the cylinder rows (6, 7) with the intermediary of a lever (angle lever 40).

16. A mounting according to claim 15, characterized in that the torque leg (19) is secured to the side of the end wall (22) lying remote from the lever (angle lever 40).

17. A mounting according to claims 1; 13 to 15, characterized in that the two torque legs (18, 19) are arranged adjacent to the vertical plane (20') through the centre of gravity of the internal combustion engine (5).

## Revendications

1. Ensemble de support d'un moteur à combustion interne qui comporte des rangées de cylindres, de préférence en V, constitue un bloc avec une bôite de vitesses et est monté transversalement dans une carrosserie de voiture particulière et est, en outre maintenu au moyen de supports et de barres anticouples sur des agencements fixes, en fait de la carrosserie, caractérisé en ce que le moteur à combustion interne (5) est suspendu au moins à un premier support (16) et à un second support (17) de telle façon que le premier support est placé au-dessus, mais pas loin du plan horizontal (20) passant par le centre de gravité, et au voisinage du plan vertical (20'), passant par le centre de gravité, du moteur à combustion interne (5), et le second support (17) est placé du côté éloigné de la transmission (14), en particulier au voisinage de la paroi frontale (21) du moteur à combustion interne (5), au moins deux barres anticouples (18, 19) orientées horizontalement et placées avec un décalage mutuel en hauteur (distance H) s'étendant entre une paroi frontale (22) de la carrosserie (2) et le moteur à combustion interne (5).

2. Ensemble de support selon la revendication 1, caractérisé en ce que le premier support (16) coopère avec la boîte de vitesse (14), tandis que le second support (17) est placé sur un carter (boîte de manivelle 10) du moteur à combustion interne (5) entre les rangées de cylindres en V (6, 7).

3. Ensemble de support selon la revendication 2, caractérisé en ce que les deux supports (16, 17) se trouvent au voisinage d'un plan de symétrie longitudinal du moteur à combustion interne (5).

4. Ensemble de support selon la revendication 1, caractérisé en ce que le premier support (16) est plus rigide dans la direction longitudinale (C-C) du véhicule que dans sa direction transversale (E-E), tandis que le second support (17) est plus rigide dans la direction transversale (E-E) du véhicule que dans sa direction longitudinale (C-C).

5. Ensemble de support selon la revendication 4, caractérisé en ce que les deux supports (16, 17) sont des composants de même structure à géométrie de caoutchouc identique.

6. Ensemble de support selon les revendications 1 à 5, caractérisé en ce que chaque support (16 ou 17) comporte une bride métallique (25') qui est reliée directement à la boîte de vitesse (14) ou au carter (boîte de manivelle 10).

7. Ensemble de support selon les revendications 1, 3 et 6, caractérisé en ce que le premier support (16) est relié de son côté éloigné de la boîte de vitesse (14) à un longeron (29) dirigé dans la direction longitudinale (C-C) du véhicule.

8. Ensemble de support selon la revendication 7, caractérisé en ce que le longeron (29) entoure à la façon d'une culasse la boîte de vitesse (14) et est raccordée à des traverses (32, 33) s'étendant au-dessous du support (16).

9. Ensemble de support selon les revendications 7 et 8, caractérisé en ce que le longeron (29) et les traverses (32, 33) font partie d'un tréteau de support (34).

10. Ensemble de support selon les revendications 1 à 3 et 6, caractérisé en ce que le second support (17) est relié, de son côté éloigné du carter (boîte de manivelle 10) à une console (35) fixée à la carrosserie (2).

11. Ensemble de support selon la revendication 10, caractérisé en ce que le second support (17) est raccordé à un bras (36) de la console (35) orienté sensiblement horizontalement.

12. Ensemble de support selon les revendications 7 et 11, caractérisé en ce que les support (16, 17) sont prémontés sur la traverse (29) ou le bras (36) et le moteur à combustion interne (5) est rapproché de ces supports (16, 17) par le dessous de la voiture particulière (1).

13. Ensemble de support selon la revendication 1, caractérisé en ce que la barre anticouples inférieure (18) est fixée à la boîte de vitesse (14) au-dessous d'un plan transversal (37) coupant l'axe de symétrie longitudinal (d) du vilebrequin.

14. Ensemble de support selon les revendications 9 et 13, caractérisé en ce que la barre anticouples inférieure (18) sur la traverse (33) du tréteau de support (34) de son côté éloigné de la boîte de vitesse (14).

15. Ensemble de support selon la revendication 1, caractérisé en ce que la barre anticouples supérieure (19) s'étend au-dessus de l'une des rangées de cylindres (7) et est retenue grâce à un levier (levier coudé 40) sur le carter (boîte de manivelle 10) entre les rangées de cylindres (6, 7).

16. Ensemble de support selon la revendication 15, caractérisé en ce que la barre anticouples (19) est fixée à la paroi frontale (22) du côté éloigné du levier (levier coudé (40)).

17. Ensemble de support selon les revendications 1, 13 à 15, caractérisé en ce que les deux barres anticouples (18, 19) sont disposées au voisinage du plan vertical (20') du moteur à combustion interne (5) passant part le centre de gravité.

FIG.1

FIG.2

FIG. 3